# EUROPEAN PATENT SPECIFICATION

(11) **EP 3 026 861 B1**
(45) Date of publication and mention of the grant of the patent: **15.01.2020**
(21) Application number: 14801499.6
(22) Date of filing: 23.05.2014
(51) Int. Cl.: H04L 29/06, H04L 12/24, H04L 12/26, H04L 7/00, H04J 3/06, H04L 12/721

(54) **METHOD AND APPARATUS FOR PROCESSING TIME SYNCHRONIZATION**
VERFAHREN UND VORRICHTUNG ZUR VERARBEITUNG VON ZEITSYNCHRONISATION
MÉTHODE ET APPAREIL DE TRAITEMENT DE SYNCHRONISATION TEMPORELLE

(30) Priority: 23.07.2013 CN 201310311329
(43) Date of publication of application: 01.06.2016
(73) Proprietor: ZTE Corporation, Guangdong Province 518057 (CN)
(72) Inventor: ZHANG, Junhui, Shenzhen Guangdong Province 518057 (CN)
(74) Representative: Novagraaf Technologies
(86) International application number: PCT/CN2014/078350
(87) International publication number: WO 2014/187369

(56) References cited:
- CN-A- 101 453 316
- CN-A- 101 977 104
- CN-A- 102 111 380
- CN-A- 102 957 528
- US-A1- 2013 010 600

## Description

### Technical Field

The present invention relates to the field of communication, and in particular to a method and device for processing time synchronization.

### Background

Along with continuous increase of a requirement on network performance, many complex functions are required to be added into a system structure of a router, for example, Open Shortest Path First (OSPF), a Border Gateway Protocol (BGP), multicast, differentiated service, traffic engineering, Network Address Translation (NAT), a fireproof and Multi-Protocol Label Switching (MPLS). Thus, switching equipment such as a router gets more and more bloated, and its performance improvement space gets smaller and smaller.

Totally different from the field of networks in an awkward situation, the field of computers is rapidly developed. By reviewing the development of the field of computers, it is not so difficult to discover that the key is a simple and available hardware bottom layer (x86 instruction set) found in the field of computers. Due to existence of such a shared hardware bottom layer, either application programs or operating systems are rapidly developed in terms of software. Nowadays, many people advocating to redesign a computer network system structure think that: all problems of an existing network may be solved by duplicating a success in the field of computers. Under the guidance of such a thought, a network in the future must be like this: a bottom-layer data path (switch and router) is "mute, simple and smallest", an open FlowTable-associated shared Application Programming Interface (API) is defined, and in addition, a controller is adopted to control the whole network. Therefore, the API in a bottom layer may be freely called for programming on the controller to implement network innovation.

Based on the abovementioned concept, a Software Defined Network (SDN) appears, and it is originally a novel network innovation architecture proposed by the clean slate study group of Stanford University. At present, its core technology OpenFlow protocol separates a control plane and data plane of network equipment, thereby implementing flexible control over network traffic and providing a good platform for innovation of a core network and an application. The OpenFlow protocol is used to describe a standard of information for interaction between a controller and a switch and an interface standard of the controller and the switch. A core part of the protocol is a set used for an OpenFlow protocol information structure.

An OpenFlow FlowTable is used to configure a forwarding path of a switch, Table 1 is a diagram of a FlowTable in a related technology, and as shown in Table 1, the FlowTable consists of the following fields such as Match Fields, Counters and Instructions:

| | | | | | |
|---|---|---|---|---|---|
| Match Fields | Priority | Counters | Instructions | Timeouts | Cookie |

Wherein Match Fields are information extracted from a header of a message, and are used to match a FlowTable; Counters are various statistical information for management; and Instructions refer to operation instructions for the message, including discarding and forwarding the message to a specified port, setting a field value of the header of the message, adding an encapsulation label and the like. An Action Set is associated with each message, is transmitted among multiple FlowTables of a flow line, and is modified by instructions of each FlowTable until processing of the flow line is ended, thereby forming a final Action Set. For example, the current latest OpenFlow 1.3.2 specifies 11 actions, i.e. copy Time To Live (TTL) inwards: action of copying TTL of a message application to an inner layer; pop: operation of popping up a label of the message application; push-vlan: operation of pressing a Virtual Local Area Network (VLAN) label into the message application; push-mpls: operation of pressing an MPLS label into the message application; copy TTL outwards: action of copying the TTL of the message application to an outer layer; decrement TTL: subtracting 1 from a TTL value of the message; set: apply all set-_eld actions to the packet; qos: apply all Quality of Service (QoS) actions, such as set queue to the packet; group: if a group action is specified, apply the actions of the relevant group bucket(s) in the order specified by this list; output: if no group action is specified, forward the packet on the port specified by the output action; and push PBB: apply Provider Backbone Bridge (PBB) tag push action to the packet.

In the related technology, processing of a TimeStamp (TS) of 1588 synchronization equipment includes:
(1) for 1588 Boundary Clock (BC) equipment, when a 1588 message is sent from an egress port, it is necessary to record current TS information of the synchronization equipment in the message, and when a 1588 message is received from an ingress port, it is also necessary to record current TS information of the synchronization equipment in the message;
(2) for 1588 Transparent Clock (TC) equipment, when a 1588 message is received at an ingress port, it is necessary to record an ingress TS, and when a 1588 message is sent from an egress port, it is necessary to record an egress TS, calculate residence time (equal to a difference obtained by subtracting the ingress TS from the egress TS) and correct a CorrectionField in the 1588 message (CF_new=CF_old+residence time);

1588 has an extremely high requirement on time synchronization accuracy, and message identification and TS processing of a 1588 message are required to be performed at a position which is closest to a physical port; in addition, the identification and TS processing of the 1588 message are also required to be performed at the same time, and separate execution may cause an uncertain time delay and influence on time synchronization accuracy; based on the abovementioned two points, implementation of 1588 time synchronization in an OpenFlow network requires adoption of an OpenFlow FlowTable configuration message for 1588 message identification, and requires support to a corresponding TS processing instruction; and however, an existing OpenFlow instruction and action may implement encapsulation and modification of Ethernet, Internet Protocol (IP)/MPLS and PBB messages, but there are no 1588 synchronization message processing instructions, so that time synchronization may not be correctly implemented.

Therefore, the OpenFlow protocol in the related technology may not implement precision time synchronization.

The patent document US 2013/0010600A1 discloses a method for processing time synchronization, performed by a device for processing time synchronization. The method comprises extending an instruction set of OpenFlow protocol, and sending a FlowTale configuration message to an equipment. However, the above mentioned problem still remains unsolved with the solution disclosed in this document.

### Summary

The invention is defined by a method according to claim 1, a method according to claim 4, a SDN controller according to claim 7 and a time synchronization equipment according to claim 10. Further embodiments are defined by the dependent claims.

According to one aspect of the present invention, a first method for processing time synchronization, performed by a Software Defined Network, SDN, controller, is provided, the first method comprising: extending an instruction set of OpenFlow protocol wherein the extended instruction set is used to implement Precision Time Protocol, PTP, based time synchronization (S102); wherein extending the instruction set of OpenFlow protocol (S102) comprises: adding a TimeStamp ,TS, generation instruction, to a FlowTable configuration message, wherein the TS generation instruction instructs a time synchronization equipment to generate a current TS when the time synchronization equipment receives a PTP synchronization message at an ingress port and/or sends a PTP synchronization message at an egress port and sending the FlowTable configuration message to a plurality of time synchronization equipment that implement PTP-based time synchronization,(S104); wherein the FlowTable configuration message comprises the extended instruction set, and wherein the plurality of time synchronization equipment are clock equipment that implement PTP-based time synchronization processing according to the extended instruction set.

Wherein, after sending the FlowTable configuration message to the time synchronization equipment (S104), the first method further comprises: receiving a time synchronization parameter which is fed back by the time synchronization equipment and used for calculation of time synchronization.

According to another aspect of the present invention, a second method for time synchronization, performed by a time synchronization equipment, is provided, the time synchronization equipment being a clock equipment, the second method comprising: receiving a FlowTable configuration message sent by a Software Defined Network ,SDN, controller (S202), wherein the FlowTable configuration message comprises an extended instruction set obtained by extending an instruction set of OpenFlow protocol, and wherein the extended instruction set is used to implement Precision Time Protocol, PTP, based time synchronization; wherein the extended instruction set of OpenFlow protocol comprises a TimeStamp, TS, generation instruction, wherein the TS generation instruction instructs the time synchronization equipment to generate a current TS when the time synchronization equipment receives a PTP synchronization message at an ingress port and/or sends a PTP synchronization message at an egress port; and implementing PTP-based time synchronization processing according to the extended instruction set (S204).

Wherein, before implementing time synchronization processing according to the extended instruction set (S204), the second method further comprises: sending a time synchronization parameter used for calculation of time synchronization to the SDN controller.

According to another aspect of the present invention, a software Defined Network, SDN, controller, is provided, the controller comprising: an extension module (32), configured to extend an instruction set of OpenFlow protocol wherein the extended instruction set is used to implement Precision Time Protocol, PTP, based time synchronization; wherein the extension module (32) comprises: a first addition unit (41), configured to add a TimeStamp, TS, generation instruction to a FlowTable configuration message, wherein the TS generation instruction instructs a time synchronization equipment to generate a current TS when the time synchronization equipment receives a PTP synchronization message at an ingress port and/or sends a PTP synchronization message at an egress port; and a first sending module (34), configured to send the FlowTable configuration message to a plurality of time synchronization equipment that implement PTP-based time synchronization, wherein the FlowTable configuration message comprises the extended instruction set, and wherein the plurality of time synchronization equipment are clock equipment that implement PTP-based time synchronization processing according to the extended instruction set

Wherein, the SDN controller may further include: a first receiving module, configured to receive a time synchronization parameter which is fed back by the time synchronization equipment and used for calculation of time synchronization.

According to another aspect of the present invention, a time synchronization equipment, the time synchronization equipment being a clock equipment is provided, the time synchronization equipment comprising: a second receiving module (62), configured to receive a FlowTable configuration message sent by a Software Defined Network ,SDN, controller, wherein the FlowTable configuration message comprises an extended instruction set obtained by extending an instruction set of OpenFlow protocol, and wherein the extended instruction set is used to implement Precision Time Protocol, PTP, based time synchronization; wherein the extended instruction set of OpenFlow protocol comprises a TimeStamp, TS, generation instruction, wherein the TS generation instruction instructs the time synchronization equipment to generate a current TS when the time synchronization equipment receives a PTP synchronization message at an ingress port and/or sends a PTP synchronization message at an egress port; and a processing module (64); configured to implement PTP-based time synchronization processing according to the extended instruction set.

Wherein, the time synchronization equipment may further include: a second sending module, configured to send a time synchronization parameter used for calculation of time synchronization to the SDN controller.

According to the present invention, the problem that the OpenFlow protocol in the related technology may not implement precision time synchronization is solved, and effects of enabling the OpenFlow protocol to support precision time synchronization and expanding application fields of the OpenFlow protocol are further achieved.

### Brief Description of the Drawings

The drawings described here are adopted to provide further understanding of the present invention, and form a part of the present invention. Schematic embodiments of the present invention and description thereof are adopted to explain the present invention and not intended to form improper limits to the present invention. In the drawings:
Fig. 1 is a flowchart of a time synchronization processing method according to an embodiment of the present invention;
Fig. 2 is a flowchart of a time synchronization processing method according to an embodiment of the present invention;
Fig. 3 is a structure diagram of a first time synchronization processing device according to an embodiment of the present invention;
Fig. 4 is a preferred structure diagram of an extension module 32 in a first time synchronization processing device according to an embodiment of the present invention;
Fig. 5 is a preferred structure diagram of a first time synchronization processing device according to an embodiment of the present invention;
Fig. 6 is a structure diagram of a second time synchronization processing device according to an embodiment of the present invention;
Fig. 7 is a preferred structure diagram of a second time synchronization processing device according to an embodiment of the present invention; and
Fig. 8 is a diagram of OpenFlow-based time synchronization according to a preferred embodiment of the present invention.

### Detailed Description of the Embodiments

The present invention will be described below with reference to the drawings and embodiments in detail. It is important to note that the embodiments in the present invention and characteristics in the embodiments can be combined under the condition of no conflicts.

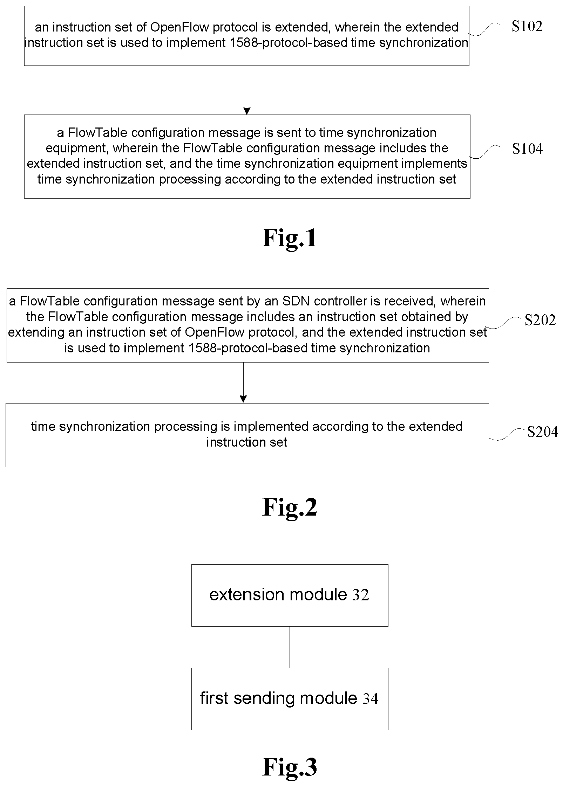

The embodiment provides a time synchronization processing method. Fig. 1 is a flowchart of a time synchronization processing method according to an embodiment of the present invention, and as shown in Fig. 1, the flow includes the following steps:
Step 102: an instruction set of OpenFlow protocol is extended, wherein the extended instruction set is used to implement 1588-protocol-based time synchronization; and
Step 104: a FlowTable configuration message is sent to time synchronization equipment, wherein the FlowTable configuration message includes the extended instruction set, and the time synchronization equipment implements time synchronization processing according to the extended instruction set.

By the steps, the existing instruction set of OpenFlow protocol is extended, and processing instructions for a 1588-protocol-based synchronization message are added, so that the problem that an OpenFlow protocol in the related technology may not implement precision time synchronization is solved, and effects of enabling the OpenFlow protocol to support precision 1588 time synchronization and expanding application fields of the OpenFlow protocol are further achieved.

Preferably, for processing of the time synchronization equipment over different time synchronization messages, multiple different instructions may be extended in the instruction set of OpenFlow protocol, and for example, the step that the instruction set is extended may include at least one of: a TS generation instruction is added, wherein the TS generation instruction is used to generate a current TS when the time synchronization equipment receives a message at an ingress and/or sends a message at an egress; a message sending instruction is added, wherein the message sending instruction is used to perform at least one of: sending a follow-up message at the same time when master clock equipment finishes sending a synchronization message, sending a delay request message at the same time when slave clock equipment receives the synchronization message, and sending a delay request response message at the same time when the master clock equipment receives the delay request message; a metadata length extension instruction is added, wherein the metadata length extension instruction is used to increase the byte number of metadata; a metadata writing instruction is added, wherein the metadata writing instruction is used to write the metadata; a CF modification instruction is added, wherein the CF modification instruction is used to modify a CF in the message; and a TS copying instruction is added, wherein the TS copying instruction is used to copy time synchronization information of a field included in the delay request message into a corresponding field in the delay request response message.

Preferably, after the FlowTable configuration message is sent to the time synchronization equipment, a time synchronization parameter which is fed back by the time synchronization equipment and used for calculation of time synchronization may also be received, and then the received time synchronization parameter is stored and processed. By such processing, the time synchronization parameter used for calculation of time synchronization may be backed up on one hand, and on the other hand, an SDN controller may control time synchronization processing of the time synchronization equipment.

The embodiment further provides a time synchronization processing method. Fig. 2 is a flowchart of a time synchronization processing method according to an embodiment of the present invention, and as shown in Fig. 2, the flow includes the following steps:
Step 202: a FlowTable configuration message sent by an SDN controller is received, wherein the FlowTable configuration message includes an instruction set obtained by extending an instruction set of OpenFlow protocol, and the extended instruction set is used to implement 1588-protocol-based time synchronization; and
Step 204: time synchronization processing is implemented according to the extended instruction set.

By the steps, the existing instruction set of OpenFlow protocol is extended in an SDN, the extended instruction set may implement 1588-protocol-based time synchronization, and time synchronization equipment implements time synchronization processing according to the extended instruction set included in the FlowTable configuration message when receiving the FlowTable configuration message including the extended instruction set, so that the problem that an OpenFlow protocol in the related technology may not implement precision time synchronization is solved, the OpenFlow protocol may support precision 1588 time synchronization, and application fields of the OpenFlow protocol are expanded.

It is important to note that the extended instruction set used to implement precision 1588-protocol-based time synchronization may include multiple instructions, and for example, the extended instruction set may include at least one of: a TS generation instruction, wherein the TS generation instruction is used to generate a current TS when the time synchronization equipment receives a message at an ingress and/or sends a message at an egress; a message sending instruction, wherein the message sending instruction is used to perform at least one of: sending a follow-up message at the same time when master clock equipment finishes sending a synchronization message, sending a delay request message at the same time when slave clock equipment receives the synchronization message and sending a delay request response message at the same time when the master clock equipment receives the delay request message; a metadata length extension instruction, wherein the metadata length extension instruction is used to increase the byte number of metadata; a metadata writing instruction, wherein the metadata writing instruction is used to write the metadata; a CF modification instruction, wherein the CF modification instruction is used to modify a CF in the message; and a TS copying instruction, wherein the TS copying instruction is used to copy time synchronization information of a field included in the delay request message into a corresponding field in the delay request response message.

Preferably, before time synchronization processing is implemented according to the extended instruction set, the time synchronization equipment may also send a time synchronization parameter used for calculation of time synchronization to the SDN controller.

The embodiment further provides a time synchronization processing device. The device is configured to implement the abovementioned embodiment and preferred implementation mode, and that what has been described will not be elaborated. For example, the term "module", used below, is a combination of software and/or hardware capable of realizing a preset function. The device described in the following embodiment is preferably implemented by software, but implementation of the device with hardware or the combination of software and hardware is also possible and conceived.

Fig. 3 is a structure diagram of a first time synchronization processing device according to an embodiment of the present invention. As shown in Fig. 3, the device includes an extension module 32 and a first sending module 34. The device is described below.

The extension module 32 is configured to extend an instruction set of OpenFlow protocol, wherein the extended instruction set is used to implement 1588-protocol-based time synchronization; and the first sending module 34 is connected to the extension module 32, and is configured to send a FlowTable configuration message to time synchronization equipment, wherein the FlowTable configuration message may include the extended instruction set, and the time synchronization equipment may implement time synchronization processing according to the extended instruction set.

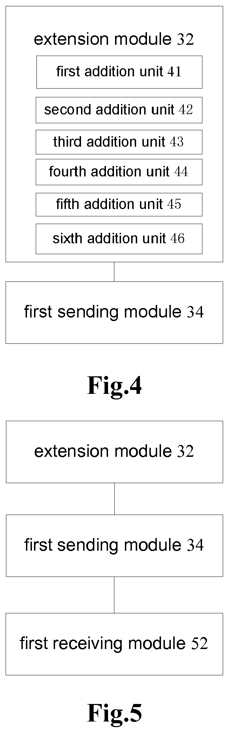

Fig. 4 is a preferred structure diagram of an extension module 32 in a first time synchronization processing device according to an embodiment of the present invention. As shown in Fig. 4, the extension module 32 includes at least one of: a first addition unit 41, a second addition unit 42, a third addition unit 43, a fourth addition unit 44, a fifth addition unit 45 and a sixth addition unit 46. The extension module 32 is described below.

The first addition unit 41 is configured to add a TS generation instruction, wherein the TS generation instruction is used to generate a current TS when the time synchronization equipment receives a message at an ingress and/or sends a message at an egress; the second addition unit 42 is configured to add a message sending instruction, wherein the message sending instruction is used to perform at least one of: sending a follow-up message at the same time when master clock equipment finishes sending a synchronization message, sending a delay request message at the same time when slave clock equipment receives the synchronization message and sending a delay request response message at the same time when the master clock equipment receives the delay request message; the third addition unit 43 is configured to add a metadata length extension instruction, wherein the metadata length extension instruction is used to increase the byte number of metadata; the fourth addition unit 44 is configured to add a metadata writing instruction, wherein the metadata writing instruction is used to write the metadata; the fifth addition unit 45 is configured to add a CF modification instruction, wherein the CF modification instruction is used to modify a CF in the message; and the sixth addition unit 46 is configured to add a TS copying instruction, wherein the TS copying instruction is used to copy time synchronization information of a field included in the delay request message into a corresponding field in the delay request response message.

Fig. 5 is a preferred structure diagram of a first time synchronization processing device according to an embodiment of the present invention. As shown in Fig. 5, the device further includes a first receiving module 52, besides all the modules shown in Fig. 3. The first receiving module 52 is described below.

The first receiving module 52 is connected to the first sending module 34, and is configured to receive a time synchronization parameter which is fed back by the time synchronization equipment and used for calculation of time synchronization.

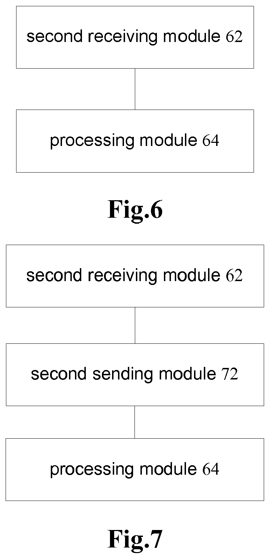

The embodiment further provides a time synchronization processing device. Fig. 6 is a structure diagram of a second time synchronization processing device according to an embodiment of the present invention. As shown in Fig. 6, the device includes a second receiving module 62 and a processing module 64. The device is described below.

The second receiving module 62 is configured to receive a FlowTable configuration message sent by an SDN controller, wherein the FlowTable configuration message includes an instruction set obtained by extending an instruction set of OpenFlow protocol, and the extended instruction set is used to implement 1588-protocol-based time synchronization; and the processing module 64 is connected to the second receiving module 62, and is configured to implement time synchronization processing according to the extended instruction set.

Preferably, the extended instruction set may include various different instructions, the various different instructions are used for time synchronization equipment to process different messages and TSs, and for example, the different instructions may include at least one of: a TS generation instruction, wherein the TS generation instruction is used to generate a current TS when the time synchronization equipment receives a message at an ingress and/or sends a message at an egress; a message sending instruction, wherein the message sending instruction is used to perform at least one of: sending a follow-up message at the same time when master clock equipment finishes sending a synchronization message, sending a delay request message at the same time when slave clock equipment receives the synchronization message and sending a delay request response message at the same time when the master clock equipment receives the delay request message; a metadata length extension instruction, wherein the metadata length extension instruction is used to increase the byte number of metadata; a metadata writing instruction, wherein the metadata writing instruction is used to write the metadata; a CF modification instruction, wherein the CF modification instruction is used to modify a CF in the message; and a TS copying instruction, wherein the TS copying instruction is used to copy time synchronization information of a field included in the delay request message into a corresponding field in the delay request response message.

Fig. 7 is a preferred structure diagram of a second time synchronization processing device according to an embodiment of the present invention. As shown in Fig. 7, the device further includes a second sending module 72, besides all the modules shown in Fig. 6. The second sending module 72 is described below.

The second sending module 72 is connected to the second receiving module 62 and the processing module 64, and is configured to send a time synchronization parameter used for calculation of time synchronization to the SDN controller.

A preferred embodiment of the present invention is described below with reference to the drawings and message processing of an extended instruction set.

In the preferred embodiment, an existing OpenFlow-protocol-based Action Set is extended to add processing instructions for 1588 synchronization messages, thereby enabling an OpenFlow protocol to support 1588 time synchronization and enlarging an application range of the OpenFlow protocol. Wherein, the added OpenFlow instructions may include at least one of:
Generate timestamp: when a Precision Time Protocol (PTP) message is received from an ingress or sent from an egress, this instruction is adopted to generate a PTP TS, and the generated TS is used for subsequent calculation of a link delay and a time offset;
Send packet: in a two-step mode, master clock equipment needs to immediately generate and send a Follow_up message when finishing sending a Sync message, slave clock equipment needs to immediately send Delay_req after receiving the Sync message, the master clock equipment needs to immediately send Delay_resp after receiving the Delay_req, and a 1588 protocol requires these messages to be encapsulated and sent in a forwarding layer because of high precision of time synchronization;
Push timestamp: it is necessary to generate an ingress and contain the ingress in a tail of a PTP message in TC equipment;
extend a length of metadata: the metadata only has 8 bytes at present, it is necessary to support more bytes when a TS is contained in the metadata, and preferably, the length of the metadata is extended into 32 bytes in the embodiment;
Modify CF (update CF): residence time is calculated by subtracting the ingress from an egress in the TC equipment, the residence time is added to correctionField in a 1588 message, and an addition result is used to modify correctionField in the message;
Copy timestamp: after the Delay_req message is received, generate timestamp is adopted to generate an ingress T4, and when the Delay_resp message is sent, it is necessary to copy the TS T4 and correctionField in the Delay_req message into a receiveTimestamp field and correctionField in the Delay_resp message respectively; and
Copy sequenceld/copy sourcePortldentity/copy domainNumber: it is necessary to copy sequenceld, sourcePortldentity and domainNumber in the Delay_req message into corresponding fields in the Delay_resp message.

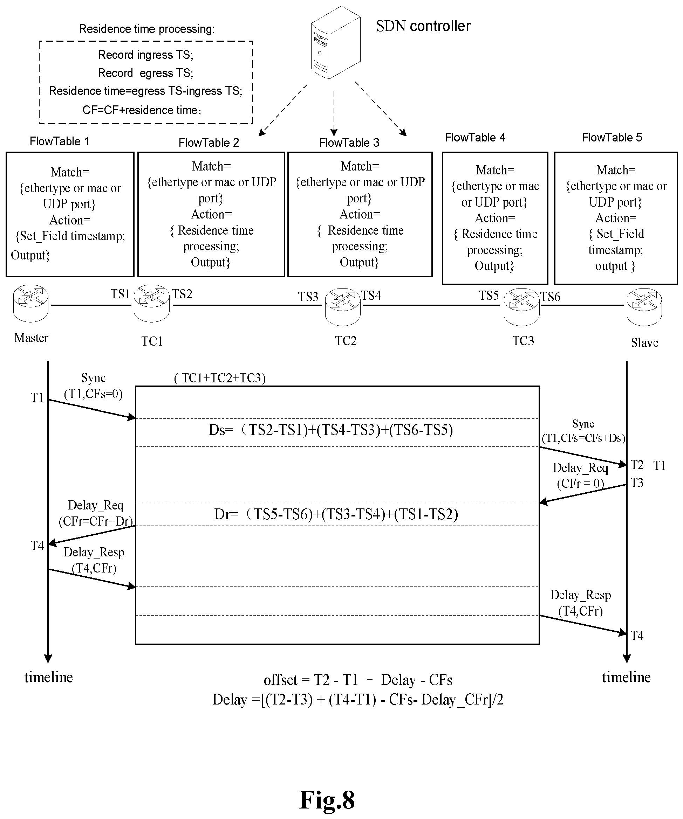

According to each extended instruction, the preferred embodiment provides an OpenFlow-based time synchronization method. Fig. 8 is a diagram of OpenFlow-based time synchronization according to a preferred embodiment of the present invention. Equipment involved in the flow includes: an SDN controller and OpenFlow synchronization equipment, wherein the OpenFlow synchronization equipment includes master clock equipment Master, TC equipment TC1, TC equipment TC2, TC equipment TC3 and slave clock equipment Slave. As shown in Fig. 8, OpenFlow-based 1588 time synchronization flow includes the following steps:
Step 1: the OpenFlow synchronization equipment establishes a connection with the controller, and the controller queries basic configuration information of the synchronization equipment from an OpenFlow switch, and configures a basic parameter of the OpenFlow synchronization equipment;
Step 2: the controller sends a layer-2 neighbouring equipment detection command message to the OpenFlow synchronization equipment, for example, a Link Layer Discovery Protocol (LLDP) message used to discover a topological structure of an OpenFlow synchronization network;
Step 3: the controller transmits a FlowTable (or called a FlowTable configuration message) used for forwarding and TS processing of a 1588 message to each piece of OpenFlow synchronization equipment for time synchronization, TS processing instructions being added into the FlowTable configuration message;
Step 4: the master clock equipment sends a Sync message to downstream synchronization equipment at T1; in order to meet a requirement of high-precision time synchronization, the Sync message is required to be processed when getting close to an egress port, that is, the FlowTable configuration message matches (Match={ethertype or mac or UDP port}) the 1588 message (Destination Media Access Control (DMAC), EtherType or a User Datagram Protocol (UDP) port number, an IP address and the like); after the 1588 message is matched, an instruction (Action={Set_Field timestamp;Output}, that is, a TS field and the egress port are set) is executed, a Generate timestamp instruction is adopted to record an egress, and the egress is contained and forwarded through an originTimestamp field of the Sync message; in addition, correctionField of the Sync message is reset;
Step 5: the message arrives at TC1, the 1588 message is matched (Match={ethertype or mac or UDP port}) according to the FlowTable configuration message configured by TC1, and correctionField of the Sync message is corrected, and for example, the following processing manners may be adopted:
   (1) an extended Push timestamp instruction is adopted to record an ingress TS1 of the Sync message at an ingress of TC1, the TS TS1 may be contained in the Sync message (added to a tail of the message without modifying the originTimestamp field of the Sync message), and may also be written into metadata (the metadata is required to be extended into more than 10 bytes) through a write-metadata instruction and sent to the next-level FlowTable configuration message for processing through the metadata;
   (2) the 1588 is required to be processed in real time, so that the 1588 message may be used to a high-priority queue through a set-queue instruction;
   (3) an instruction (Action={residence time processing;Output} is executed at an egress of TC1, the Generate timestamp instruction is adopted to record an egress, residence time is calculated by subtracting the ingress from the egress (a specific processing process includes: recording the ingress TS; recording the egress TS; calculating the residence time by subtracting the ingress TS from the egress TS; and CF=CF+residence time), and an extended Modity CF instruction is adopted to correct correctionField of the Sync message (that is, correctionField=correctionField+residence time);
Step 6: the Sync message arrives at TC2 and TC3, and a processing flow is the same as that of TC1;
   after the Sync message is processed by TC1, TC2 and TC3, correctionField of the Sync message records total residence time of the three pieces of equipment;
Step 7: the Sync message arrives at the slave clock equipment Slave, the FlowTable configuration message matches the 1588 message (Match={ethertype or mac or UDP port}) at an ingress of Slave, then an instruction (Action={Set_Field timestamp;output CPU}) is executed, the Generate timestamp instruction is adopted to record an ingress TS T2 of the Sync message, the slave clock equipment having acquired the sending TS T1, the arrival TS T2 and residence time CFs, at the intermediate equipment, of the Sync message at this moment, and these parameters are sent to the SDN controller for storage and processing;
   then, after the Sync message is received, the slave clock equipment Slave immediately sends a Delay_req message to the master clock equipment Master; the FlowTable configuration message matches the 1588 message at the egress, the Generate timestamp instruction is adopted to record an egress TS T3, and meanwhile, correctionField in the Delay_req message is set to be 0;
Step 8: the Delay_req message passes through TC3, TC2 and TC1, and a processing flow is the same as that of Step 5;
Step 9: the Delay_req message arrives at the ingress of the master clock equipment Master, the FlowTable configuration message matches the 1588 message, the Generate timestamp instruction is adopted to record an ingress TS T4 of the Delay_req message, the master clock equipment having acquired the arrival time of the Delay_req message and residence time at the intermediate equipment TC1, TC2 and TC3 at this moment, and the two parameters are stored in the metadata (they may be sent to the controller if the metadata is not long enough);
   then, the master clock equipment Master sends a Delay_resp message to Slave; at the egress, the FlowTable configuration message matches the Delay_resp message, and copies the arrival time T4 and residence time of the Delay_req message into a receiveTimestamp field and correctionField in the Delay_resp message respectively;
   in addition, it is also necessary to copy sequenceld, sourcePortldentity and domainNumber in the Delay_req message into corresponding fields in the Delay_resp message;
Step 10: the Delay_resp message is transparently transmitted when passing through TC1, TC2 and TC3, that is, correctionField is not required to be modified;
Step 11: after the Delay_resp message arrives at Slave, Slave may acquire four TSs (T1, T2, T3 and T4), and has acquired residence time CFs of the message in a receiving direction and residence time CFr in a sending direction, and according to these parameters, Slave calculates a time offset Offset=T2-T1-Delay-correctionField in the Sync message;
   wherein Delay={(T2-T3)+(T4-T1)-correctionField in the Sync message-correction Field in the Delay_resp message}/2; and
   after the time offset is calculated, Slave correct its system time to keep time of Slave and Master consistent.

Obviously, those skilled in the art should know that each module or step of the embodiment of the present invention can be implemented by a universal computing device, and the modules or steps can be concentrated on a single computing device or distributed on a network formed by a plurality of computing devices, and can optionally be implemented by programmable codes executable for the computing devices, so that the modules or steps can be stored in a storage device for execution with the computing devices, or under certain conditions, the shown or described steps can be executed in a sequence different from that described here, or the modules or steps can form each integrated circuit module respectively, or multiple modules or steps therein can form a single integrated circuit module for implementation. As a consequence, the present invention is not limited to any specific hardware and software combination.

### Industrial Applicability

By the technical solutions, the problem that an OpenFlow protocol in the related technology may not implement precision time synchronization is solved, the OpenFlow protocol may support precision time synchronization, and application fields of the OpenFlow protocol are expanded.

## Claims

1. A method for processing time synchronization, performed by a Software Defined Network, SDN, controller, the method comprising:
extending an instruction set of OpenFlow protocol wherein the extended instruction set is used to implement Precision Time Protocol, PTP, based time synchronization (S102); wherein extending the instruction set of OpenFlow protocol (S102) comprises: adding a TimeStamp ,TS, generation instruction, to a FlowTable configuration message, wherein the TS generation instruction instructs a time synchronization equipment to generate a current TS when the time synchronization equipment receives a PTP synchronization message at an ingress port and/or sends a PTP synchronization message at an egress port and
sending the FlowTable configuration message to a plurality of time synchronization equipment that implement PTP-based time synchronization, (S104); wherein the FlowTable configuration message comprises the extended instruction set, and wherein the plurality of time synchronization equipment are clock equipment that implement PTP-based time synchronization processing according to the extended instruction set.

2. The method according to claim 1, wherein, after sending the FlowTable configuration message to the time synchronization equipment (SI04), the method further comprises:
receiving a time synchronization parameter which is fed back by the time synchronization equipment and used for calculation of time synchronization.

3. A method for time synchronization, performed by a time synchronization equipment, the time synchronization equipment being a clock equipment, the method comprising:
receiving a FlowTable configuration message sent by a Software Defined Network ,SDN, controller (S202), wherein the FlowTable configuration message comprises an extended instruction set obtained by extending an instruction set of OpenFlow protocol, and wherein the extended instruction set is used to implement Precision Time Protocol, PTP, based time synchronization; wherein the extended instruction set of OpenFlow protocol comprises a TimeStamp, TS, generation instruction, wherein the TS generation instruction instructs the time synchronization equipment to generate a current TS when the time synchronization equipment receives a PTP synchronization message at an ingress port and/or sends a PTP synchronization message at an egress port;
and implementing PTP-based time synchronization processing according to the extended instruction set (S204).

4. The method according to claim 3, wherein, before implementing time synchronization processing according to the extended instruction set (S204), the method further comprises:
sending a time synchronization parameter used for calculation of time synchronization to the SDN controller.

5. A software Defined Network, SDN, controller, comprising:
an extension module (32), configured to extend an instruction set of OpenFlow protocol wherein the extended instruction set is used to implement Precision Time Protocol, PTP, based time synchronization; wherein the extension module (32) comprises: a first addition unit (41), configured to add a TimeStamp, TS, generation instruction to a FlowTable configuration message, wherein the TS generation instruction instructs a time synchronization equipment to generate a current TS when the time synchronization equipment receives a PTP synchronization message at an ingress port and/or sends a PTP synchronization message at an egress port; and
a first sending module (34), configured to send the FlowTable configuration message to a plurality of time synchronization equipment that implement PTP-based time synchronization, wherein the FlowTable configuration message comprises the extended instruction set, and wherein the plurality of time synchronization equipment are clock equipment that implement PTP-based time synchronization processing according to the extended instruction set.

6. The SDN controller according to claim 5, further comprising:
a first receiving module (52), configured to receive a time synchronization parameter which is fed back by the time synchronization equipment and used for calculation of time synchronization.

7. A time synchronization equipment, the time synchronization equipment being a clock equipment, the time synchronization equipment comprising:
a second receiving module (62), configured to receive a FlowTable configuration message sent by a Software Defined Network ,SDN, controller, wherein the FlowTable configuration message comprises an extended instruction set obtained by extending an instruction set of OpenFlow protocol, and wherein the extended instruction set is used to implement Precision Time Protocol, PTP, based time synchronization; wherein the extended instruction set of OpenFlow protocol comprises a TimeStamp, TS, generation instruction, wherein the TS generation instruction instructs the time synchronization equipment to generate a current TS when the time synchronization equipment receives a PTP synchronization message at an ingress port and/or sends a PTP synchronization message at an egress port;
and
a processing module (64); configured to implement PTP-based time synchronization processing according to the extended instruction set.

8. The time synchronization equipment according to claim 7, further comprising:
a second sending module (72), configured to send a time synchronization parameter used for calculation of time synchronization to the SDN controller.

## Patentansprüche

1. Verfahren zum Verarbeiten von Zeitsynchronisation, das von einer Software Defined Network-, SDN, Steuerung durchgeführt wird, wobei das Verfahren umfasst:
Erweitern eines Anweisungssatzes des OpenFlow-Protokolls, wobei der erweiterte Anweisungssatz verwendet wird, um Precision Time Protocol-, PTP, basierte Zeitsynchronisation zu implementieren (S102); wobei das Erweitern des Anweisungssatzes des OpenFlow-Protokolls (S102) umfasst: Hinzufügen einer TimeStamp-, TS, Erzeugungsanweisung zu einer FlowTable-Konfigurationsnachricht, wobei die TS-Erzeugungsanweisung eine Zeitsynchronisationsausrüstung dazu anweist, einen aktuellen TS zu erzeugen, wenn die Zeitsynchronisationsausrüstung eine PTP-Synchronisationsnachricht an einem Eingangsport empfängt und/oder eine PTP-Synchronisationsnachricht an einem Ausgangsport sendet, und
Senden der FlowTable-Konfigurationsnachricht an eine Vielzahl von Zeitsynchronisationsausrüstungen, die PTP-basierte Zeitsynchronisation implementieren (S104);
wobei die FlowTable-Konfigurationsnachricht den erweiterten Anweisungssatz umfasst, und wobei die Vielzahl von Zeitsynchronisationsausrüstungen Taktausrüstungen sind, die PTP-basierte Zeitsynchronisationsverarbeitung gemäß dem erweiterten Anweisungssatz implementieren.

2. Verfahren nach Anspruch 1, wobei nach dem Senden der FlowTable-Konfigurationsnachricht an die Zeitsynchronisationsausrüstung (S104) das Verfahren weiter umfasst:
Empfangen eines Zeitsynchronisationsparameters, der von der Zeitsynchronisationsausrüstung zurückgegeben und zur Berechnung von Zeitsynchronisation verwendet wird.

3. Verfahren zur Zeitsynchronisation, das von einer Zeitsynchronisationsausrüstung durchgeführt wird, wobei die Zeitsynchronisationsausrüstung eine Taktausrüstung ist, wobei das Verfahren umfasst:
Empfangen einer FlowTable-Konfigurationsnachricht, die von einer Software Defined Network-, SDN, Steuerung gesendet wird (S202), wobei die FlowTable-Konfigurationsnachricht einen erweiterten Anweisungssatz umfasst, der durch Erweitern eines Anweisungssatzes des OpenFlow-Protokolls erhalten wird, und wobei der erweiterte Anweisungssatz verwendet wird, um Precision Time Protocol-, PTP, basierte Zeitsynchronisation zu implementieren; wobei der erweiterte Anweisungssatz des OpenFlow-Protokolls eine TimeStamp-, TS, Erzeugungsanweisung umfasst, wobei die TS-Erzeugungsanweisung die Zeitsynchronisationsausrüstung dazu anweist, einen aktuellen TS zu erzeugen, wenn die Zeitsynchronisationsausrüstung eine PTP-Synchronisationsnachricht an einem Eingangsport empfängt und/oder eine PTP-Synchronisationsnachricht an einem Ausgangsport sendet;
und Implementieren von PTP-basierter Zeitsynchronisationsverarbeitung gemäß dem erweiterten Anweisungssatz (S204).

4. Verfahren nach Anspruch 3, wobei vor dem Implementieren von Zeitsynchronisationsverarbeitung gemäß dem erweiterten Anweisungssatz (S204) das Verfahren weiter umfasst:
Senden eines Zeitsynchronisationsparameters, der zur Berechnung von Zeitsynchronisation verwendet wird, an die SDN-Steuerung.

5. Software Defined Network-, SDN, Steuerung, umfassend:
ein Erweiterungsmodul (32), das dazu konfiguriert ist, einen Anweisungssatz des OpenFlow-Protokolls zu erweitern, wobei der erweiterte Anweisungssatz verwendet wird, um Precision Time Protocol-, PTP, basierte Zeitsynchronisation zu implementieren; wobei das Erweiterungsmodul (32) umfasst: eine erste Hinzufügeeinheit (41), die dazu konfiguriert ist, eine TimeStamp-, TS, Erzeugungsanweisung zu einer FlowTable-Konfigurationsnachricht hinzuzufügen, wobei die TS-Erzeugungsanweisung eine Zeitsynchronisationsausrüstung dazu anweist, einen aktuellen TS zu erzeugen, wenn die Zeitsynchronisationsausrüstung eine PTP-Synchronisationsnachricht an einem Eingangsport empfängt und/oder eine PTP-Synchronisationsnachricht an einem Ausgangsport sendet; und
ein erstes Sendemodul (34), das dazu konfiguriert ist, die FlowTable-Konfigurationsnachricht an eine Vielzahl von Zeitsynchronisationsausrüstungen zu senden, die PTP-basierte Zeitsynchronisation implementieren, wobei die FlowTable-Konfigurationsnachricht den erweiterten Anweisungssatz umfasst, und wobei die Vielzahl von Zeitsynchronisationsausrüstungen Taktausrüstungen sind, die PTP-basierte Zeitsynchronisationsverarbeitung gemäß dem erweiterten Anweisungssatz implementieren.

6. SDN-Steuerung nach Anspruch 5, weiter umfassend:
ein erstes Empfangsmodul (52), das dazu konfiguriert ist, einen Zeitsynchronisationsparameter zu empfangen, der von der Zeitsynchronisationsausrüstung zurückgegeben und zur Berechnung von Zeitsynchronisation verwendet wird.

7. Zeitsynchronisationsausrüstung, wobei die Zeitsynchronisationsausrüstung eine Taktausrüstung ist, wobei die Zeitsynchronisationsausrüstung umfasst:
ein zweites Empfangsmodul (62), das dazu konfiguriert ist, eine FlowTable-Konfigurationsnachricht zu empfangen, die von einer Software Defined Network-, SDN, Steuerung gesendet wird, wobei die FlowTable-Konfigurationsnachricht einen erweiterten Anweisungssatz umfasst, der durch Erweitern eines Anweisungssatzes des OpenFlow-Protokolls erhalten wird, und wobei der erweiterte Anweisungssatz verwendet wird, um Precision Time Protocol-, PTP, basierte Zeitsynchronisation zu implementieren; wobei der erweiterte Anweisungssatz des OpenFlow-Protokolls eine TimeStamp-, TS, Erzeugungsanweisung umfasst, wobei die TS-Erzeugungsanweisung die Zeitsynchronisationsausrüstung dazu anweist, einen aktuellen TS zu erzeugen, wenn die Zeitsynchronisationsausrüstung eine PTP-Synchronisationsnachricht an einem Eingangsport empfängt und/oder eine PTP-Synchronisationsnachricht an einem Ausgangsport sendet;
und
ein Verarbeitungsmodul (64), das dazu konfiguriert ist, PTP-basierte Zeitsynchronisationsverarbeitung gemäß dem erweiterten Anweisungssatz zu implementieren.

8. Zeitsynchronisationsausrüstung nach Anspruch 7, weiter umfassend:
ein zweites Sendemodul (72), das dazu konfiguriert ist, einen Zeitsynchronisationsparameter, der zur Berechnung von Zeitsynchronisation verwendet wird, an die SDN-Steuerung zu senden.

## Revendications

1. Procédé pour traiter une synchronisation temporelle, effectué par un contrôleur de réseau défini par logiciel, SDN, le procédé comprenant :
l'extension d'un jeu d'instructions du protocole OpenFlow, dans lequel le jeu d'instructions étendu est utilisé pour implémenter une synchronisation temporelle basée sur le protocole de temps de précision, PTP, (S102) ; dans lequel l'extension du jeu d'instructions du protocole OpenFlow (S102) comprend : l'ajout d'une instruction de génération TimeStamp, TS, à un message de configuration FlowTable, dans lequel l'instruction de génération TS donne pour instruction à un équipement de synchronisation temporelle de générer un TS actuel lorsque l'équipement de synchronisation temporelle reçoit un message de synchronisation PTP au niveau d'un port d'entrée et/ou envoie un message de synchronisation PTP au niveau d'un port de sortie et
l'envoi du message de configuration FlowTable à une pluralité d'équipements de synchronisation temporelle qui implémentent une synchronisation temporelle basée sur PTP (S104) ; dans lequel le message de configuration FlowTable comprend le jeu d'instructions étendu, et dans lequel la pluralité d'équipements de synchronisation temporelle sont des équipements d'horloge qui implémentent un traitement de synchronisation temporelle basé sur PTP selon le jeu d'instructions étendu.

2. Procédé selon la revendication 1, dans lequel, après l'envoi du message de configuration FlowTable à l'équipement de synchronisation temporelle (S104), le procédé comprend en outre :
la réception d'un paramètre de synchronisation temporelle qui est réalimenté par l'équipement de synchronisation temporelle et utilisé pour le calcul de synchronisation temporelle.

3. Procédé pour une synchronisation temporelle, effectué par un équipement de synchronisation temporelle, l'équipement de synchronisation temporelle étant un équipement d'horloge, le procédé comprenant :
la réception d'un message de configuration FlowTable envoyé par un contrôleur de réseau défini par logiciel, SDN, (S202), dans lequel le message de configuration FlowTable comprend un jeu d'instructions étendu obtenu en étendant un jeu d'instructions du protocole OpenFlow, et dans lequel le jeu d'instructions étendu est utilisé pour implémenter une synchronisation temporelle basée sur le protocole de temps de précision, PTP ; dans lequel le jeu d'instructions étendu du protocole OpenFlow comprend une instruction de génération TimeStamp, TS, dans lequel l'instruction de génération TS donne pour instruction à l'équipement de synchronisation temporelle de générer un TS actuel lorsque l'équipement de synchronisation temporelle reçoit un message de synchronisation PTP au niveau d'un port d'entrée et/ou envoie un message de synchronisation PTP au niveau d'un port de sortie ;
et l'implémentation d'un traitement de synchronisation temporelle basé sur PTP selon le jeu d'instructions étendu (S204).

4. Procédé selon la revendication 3, dans lequel, avant l'implémentation d'un traitement de synchronisation temporelle selon le jeu d'instructions étendu (S204), le procédé comprend en outre :
l'envoi d'un paramètre de synchronisation temporelle utilisé pour le calcul de synchronisation temporelle au contrôleur SDN.

5. Contrôleur de réseau défini par logiciel, SDN, comprenant :
un module d'extension (32), configuré pour étendre un jeu d'instructions du protocole OpenFlow, dans lequel le jeu d'instructions étendu est utilisé pour implémenter une synchronisation temporelle basée sur le protocole de temps de précision, PTP ; dans lequel le module d'extension (32) comprend : une première unité d'ajout (41), configurée pour ajouter une instruction de génération TimeStamp, TS, à un message de configuration FlowTable, dans lequel l'instruction de génération TS donne pour instruction à un équipement de synchronisation temporelle de générer un TS actuel lorsque l'équipement de synchronisation temporelle reçoit un message de synchronisation PTP au niveau d'un port d'entrée et/ou envoie un message de synchronisation PTP au niveau d'un port de sortie ; et
un premier module d'envoi (34), configuré pour envoyer le message de configuration FlowTable à une pluralité d'équipements de synchronisation temporelle qui implémentent une synchronisation temporelle basée sur PTP, dans lequel le message de configuration FlowTable comprend le jeu d'instructions étendu, et dans lequel la pluralité d'équipements de synchronisation temporelle sont des équipements d'horloge qui implémentent un traitement de synchronisation temporelle basé sur PTP selon le jeu d'instructions étendu.

6. Contrôleur SDN selon la revendication 5, comprenant en outre :
un premier module de réception (52), configuré pour recevoir un paramètre de synchronisation temporelle qui est réalimenté par l'équipement de synchronisation temporelle et utilisé pour le calcul de synchronisation temporelle.

7. Equipement de synchronisation temporelle, l'équipement de synchronisation temporelle étant un équipement d'horloge, l'équipement de synchronisation temporelle comprenant :
un second module de réception (62), configuré pour recevoir un message de configuration FlowTable envoyé par un contrôleur de réseau défini par logiciel, SDN, dans lequel le message de configuration FlowTable comprend un jeu d'instructions étendu obtenu en étendant un jeu d'instructions du protocole OpenFlow, et dans lequel le jeu d'instructions étendu est utilisé pour implémenter une synchronisation temporelle basée sur le protocole de temps de précision, PTP ; dans lequel le jeu d'instructions étendu du protocole OpenFlow comprend une instruction de génération TimeStamp, TS, dans lequel l'instruction de génération TS donne pour instruction à l'équipement de synchronisation temporelle de générer un TS actuel lorsque l'équipement de synchronisation temporelle reçoit un message de synchronisation PTP au niveau d'un port d'entrée et/ou envoie un message de synchronisation PTP au niveau d'un port de sortie ;
et
un module de traitement (64), configuré pour implémenter un traitement de synchronisation temporelle basé sur PTP selon le jeu d'instructions étendu.

8. Equipement de synchronisation temporelle selon la revendication 7, comprenant en outre :
un second module d'envoi (72), configuré pour envoyer un paramètre de synchronisation temporelle utilisé pour le calcul de synchronisation temporelle au contrôleur SDN.
